# EUROPÄISCHE PATENTSCHRIFT

(11) **EP 2 591 052 B1**
(45) Veröffentlichungstag und Bekanntmachung des Hinweises auf die Patenterteilung: **19.11.2014**
(21) Anmeldenummer: 11725385.6
(22) Anmeldetag: 01.06.2011
(51) Int. Cl.: C08L 33/12, C08L 97/02

(54) **VERBUNDWERKSTOFF AUS EINEM ZELLULOSEHALTIGEN MATERIAL MIT PMMA ALS KUNSTOFFMATRIX MITTELS VERSCHIEDENER KOPPLUNGS-KOMPONENTEN**
COMPOSITE MATERIAL MADE OF A MATERIAL CONTAINING CELLULOSE WITH PMMA AS A PLASTIC MATRIX USING DIFFERENT COUPLING COMPONENTS
MATÉRIAU COMPOSITE COMPORTANT UN MATÉRIAU CELLULOSIQUE DOTÉ DE POLYMÉTHACRYLATE DE MÉTHYLE (PMMA) EN TANT QUE MATRICE PLASTIQUE À L'AIDE DE DIFFÉRENTS ÉLÉMENTS DE COUPLAGE

(30) Priorität: 05.07.2010 DE 102010030926
(43) Veröffentlichungstag der Anmeldung: 15.05.2013
(73) Patentinhaber: Evonik Röhm GmbH, 64293 Darmstadt (DE)
(72) Erfinder: SCHÜTZ, Carlo, 64409 Messel (DE); ROTH, Christian, 64686 Lautertal (DE); CARLOFF, Rüdiger, 64291 Darmstadt (DE); SCHULTES, Klaus, 65193 Wiesbaden (DE); KHRENOV, Victor, 60323 Frankfurt (DE); REINHEIMER, Eric, 64846 Gross-Zimmern (DE)
(86) Internationale Anmeldenummer: PCT/EP2011/059006
(87) Internationale Veröffentlichungsnummer: WO 2012/004059

(56) Entgegenhaltungen:
- EP-A1- 0 982 110
- EP-A1- 1 918 328
- FR-A- 1 575 752

## Beschreibung

Die vorliegende Erfindung betrifft neuartige Verbundmaterialien aus zumindest einem zellulosehaltigen Material, bevorzugt Holz, und zumindest einem Kunststoff, mit verbesserten mechanischen Eigenschaften und verbesserter Witterungsbeständigkeit, ein Verfahren zu deren Herstellung sowie deren Verwendung.

Verbundmaterialien aus zumindest einem zellulosehaltigen Material und zumindest einem Kunststoff werden heutzutage insbesondere in Form von Holz-Kunststoff-Verbundwerkstoffen, sogenannte WPCs "Wood plastic composites", großtechnisch hergestellt. Im Rahmen der nachfolgend beschriebenen Erfindung werden die Begriffe "Holz-Kunststoff-Verbundmaterial(ien)", "Holz-Kunststoff-Verbundwerkstoff(e)" und "WPC(s)" synonym verwendet. Die Begriffe "Verbundmaterial" und "Verbundwerkstoff" werden ebenfalls synonym verwendet.

Historisch betrachtet werden Vollholz und traditionelle Holzwerkstoffe in der Regel als Bau- und Möbelwerkstoffe genutzt. Die WPC-Materialien haben diese klassischen Anwendungsbereiche aufgrund von verbesserten Formgebungsverfahren um wesentliche neue Einsatzmöglichkeiten erweitert.

Bei WPC Materialien handelt es sich um eine Verbindung von Holzpartikeln (wie Holzsplitter, Sägespäne, Holzfasern oder Holzmehle) mit einer Kunststoffmatrix. Als Kunststoffmatrix dienen in der Regel thermoplastische Kunststoffe.

Bei der ursprünglichen Entwicklung der WPCs in Nordamerika wurde Holz primär als billiger Füllstoff eingesetzt. Die Kosten für die Holzspäne liegen bei einem Bruchteil der alternativ dafür eingesetzten Kunststoffe, womit der Holzanteil die Materialkosten im Produkt verbilligt. Im Vergleich zu den eingesetzten Kunststoffen besitzt Holz ein höheres Elastizitätsmodul, so dass sich bei einer optimierten Holz-Kunststoff-Kombination gegenüber dem reinen Kunststoff bessere mechanische Eigenschaften ergeben.

Weltweit dominieren drei Kunststoffe in beinahe allen kommerziell hergestellten WPC-Materialien. Während in Amerika vorwiegend Polyethylen (PE) zum Einsatz gelangt, wird in Europa hauptsächlich Polypropylen (PP) verwendet. In Asien wird sehr häufig Polyvinylchlorid (PVC) als WPC-Kunststoff genutzt. Allen drei Kunststoffen ist gemein, das sie Massenkunststoffe darstellen und daher relativ preisgünstig zu haben sind. Dieser kommerzielle Gesichtspunkt ist mit unter ein Grund, warum sich die WPC-Forschung maßgeblich nur mit den genannten thermoplastischen Kunststoffen beschäftigt hat.

Auf der anderen Seite ist es nach wie vor eine Herausforderung, Naturfasern (wie z.B. Zellulose) an Polymere dauerhaft anzubinden. Bei den genannten Kunststoffen PE, PP und PVC ist die Anbindung an Holzfasern mittels Haftvermittler infolge einer Jahrzehnte langen Entwicklung hinreichend gut gelöst.

Die derzeitige Weiterentwicklung der WPC Werkstoffe beschäftigt sich neben der Optimierung der Prozesstechnologie sehr stark mit der Verbesserung von Produkteigenschaften bzw. mit auf für bestimmte Einsatzzwecke maßgeschneiderten Eigenschaften.

WPC-Werkstoffe werden derzeit vornehmlich im Außeneinsatz verwendet. Eine große Anwendung für WPC sind Terrassenpaneele, sogenannte "Deckings". Hier konkurrieren WPC Materialien hauptsächlich gegen Edelhölzer aus subtropischen Regionen. In Bauanwendungen erwartet man von WPC Materialien neben der Materialfestigkeit höchste Dauerhaftigkeit, mindestens aber eine vergleichbare zu resistenten Naturhölzern.

Aufgrund der verwendeten Einsatzstoffe unterliegen WPC-Materialien in der Regel im Außenbereich einer Veränderung durch Witterungseinflüsse, sofern sie nicht durch eine Oberflächenvergütung geschützt werden. Der Grad der Alterung ist einerseits abhängig von der Resistenz der verwendeten Holzfasern, andererseits auch vom Langzeitverhalten des eingesetzten Kunststoffs.

Es ist allgemein bekannt, dass Kunststoffe sehr weit gefasste Produkteigenschaftsbereiche aufweisen. Dieses betrifft sowohl thermische als auch mechanische und Langfrist-Eigenschaften. Vor dem Hintergrund der Entwicklung dauerhafter WPC Materialien für den Außenbereich besteht somit nach wie vor ein Bedarf an Verbundwerkstoffen mit besserer Witterungsbeständigkeit im Vergleich zu WPCs auf Basis von Polyolefinen.

Die Herstellung von WPC Materialien geschieht häufig über Spritzguss- bzw. Extrusionsverfahren und findet somit durch Plastifizierungsvorgänge bei Schmelzetemperatur der Kunststoffkomponente statt. Auch, aber eher weniger verbreitet, sind nass-chemische Polymerisationsprozesse mit Holzpartikeln.

Polymethylmethacrylat, kurz PMMA, ist bekannt für extreme Witterungsbeständigkeit und hohe mechanische Festigkeiten. Es ist damit im Eigenschaftsspektrum gut geeignet für Bauanwendungen. Für WPC-Anwendungen konnte dieses Material bislang jedoch nicht eingesetzt werden, da zu hohe Verarbeitungstemperaturen bei der Extrusion notwendig waren und dadurch Schädigungen der Holzpartikel verursacht wurden. Ferner ist das Problem der Anbindung des PMMAs an die Holzpartikel bislang nicht zufriedenstellend gelöst.

Ausgehend vom zuvor beschriebenen Stand der Technik bestand daher die Aufgabe darin, Verbundmaterialien aus zumindest einem zellulosehaltigen Material, bevorzugt Holz, und zumindest einem Kunststoff mit verbesserter Witterungsbeständigkeit und verbesserten mechanischen Eigenschaften sowie ein Verfahren zu deren Herstellung bereitzustellen.

Eine weitere Aufgabe bestand darin, witterungsbeständige WPC-Materialien ohne zusätzliche Oberflächenvergütung bereitzustellen.

Weitere nicht explizit genannte Aufgaben ergeben sich aus dem Gesamtzusammenhang der nachfolgenden Beschreibung, Beispiele und Ansprüche.

Der vorliegenden Erfindung lag die Idee zu Grunde, unter Verwendung von Poly(alkyl)(meth)acrylat, einem thermoplastischen Kunststoff mit hervorragender Witterungsbeständigkeit, neuartige Verbundmaterialien herzustellen. Dabei ist es gelungen, die Stärken dieses Kunststoffs mit den Vorteilen der zellulosehaltigen Komponenten zu maßgeschneiderten Verbundmaterialien zu verbinden.

Die Schlüsselaufgabe hierbei war es, das zellulosehaltige Material, insbesondere Natur- oder Holzfasern, an das Polymer hinreichend gut anzuhaften, anzuknüpfen bzw. anzubinden und die Verarbeitungstemperatur so weit zu senken, dass eine Verkohlung der Holzpartikel verhindert werden kann. Dies wurde durch Einsatz eines speziellen Poly(alkyl)(meth)acrylats zusammen mit einem mit Zellulose kompatiblen Haftvermittler und einem Gleitmittel erreicht.

Gegenstand der vorliegenden Erfindung ist daher ein Verbundmaterial aus zumindest einer zellulosehaltigen Komponente, bevorzugt Holz, und zumindest einem Kunststoff, dadurch gekennzeichnet, dass der Kunststoff
a) ein Poly(alkyl)(meth)acrylat-Matrixmaterial mit
   a1) einem Schmelzindex MVR [230°C, 3.8kg] im Bereich von 0,5 - 30 ml/10min, besonders bevorzugt 1-20 ml/10min und ganz besonders bevorzugt im Bereich von 1-10 ml/10min, und
b) einen mit Zellulose kompatiblen Haftvermittler, enthält, und
   dass das Verbundmaterial ein Gleitmittel umfasst.

Gegenstand der vorliegenden Erfindung ist zudem ein Verfahren, bei dem zumindest ein oben näher beschriebener Kunststoff mit zumindest einem zellulosehaltigen Material, einem Gleitmittel und optional weiteren Komponenten vermischt und anschließend zu einem Verbundmaterial verarbeitet wird.

Gegenstand ist ebenfalls die Verwendung des erfindungsgemäßen Verbundmaterials, insbesondere als Werkstoff in Bereichen mit erhöhter Feuchtigkeitseinwirkung, insbesondere im Außenbereich, wie z. B. als Bodenbeläge, z. B. als Terrassenpaneele etc., als Konstruktionsmaterialien, wie z. B. als Konstruktionshölzer, Bretter, Balken, Treppen und Treppenstufen, Pfosten, Schalungstafeln, Gartenhütten, Spieltürme, Spielgeräte, Sandkästen, Carports, Pavillons, Türzargen, Türblätter, Fensterbänke etc., als Wandelemente, als Wandverkleidungen, Schallschutzelemente, Balustraden, als Deckenverkleidungen, als Dachabdeckungen, im Schiffsbau oder zum Bau von Hafenanlagen, z. B. Bootsstegen, Bootsabweiser, Schiffdecks etc., als wartungsfreier Möbelwerkstoff im Innen- und Außenbereich, wie z.B. Stühle, Liegen, Regale, Theken, Gartenbänke, Küchenmöbel, Arbeitsplatten, Badmöbel etc., als Behälter bzw. Einfassungen, wie z. B. Raseneinfassungen, Beeteinfassungen, Rollrabatte, Blumentöpfe, Pflanztröge etc. als Spielbauklötze und im Automobilinnendekor und in der Automobilaußenverkleidung sowie als Wohnwagenanbauteile.

Das erfindungsgemäße Verbundmaterial ist für den Praxiseinsatz im Freien bestens geeignet, da es eine geringe Wasseraufnahme, große Formstabilität durch geringes Quellverhalten und hohe mechanische Festigkeit aufweist.

Durch die Möglichkeit der Verarbeitung bei Temperaturen kleiner gleich 225°C, bevorzugt kleiner gleich 220°C können Schädigungen des zellulosehaltigen Materials, insbesondere bei Verwendung von Holz, vermieden und Energiekosten gesenkt werden.

Insbesondere beim Einsatz eines erfindungsgemäßen Kunststoffs zusammen mit einem Gleitmittel kann man ein Verbundmaterial herstellen, dass sich erstaunlicher Weise mit einem Holzanteil von 70 Gew.% bei ca. 205°C gut extrudieren lässt. Ferner kann man auf diese Weise sogar WPCs mit einem Holzanteil von bis zu 80 Gew.% erhalten.

Die erfindungsgemäßen Extrudate zeigen ein gleiches oder besseres Feuchteverhalten als WPCs auf Polyolefinbasis. Hinzu kommen die besseren mechanischen Eigenschaften und die exzellente Witterungsstabilität der erfindungsgemäßen Kunststoffmatrix gegenüber Polyolefinen.

In praktischen Versuchen konnte gezeigt werden, dass die Wasseraufnahme der erfindungsgemäßen WPC's im Vergleich zu WPC's aus reinem PMMA von ca. 30 Gew.% auf unter 6 Gew.% reduziert werden kann und damit im entsprechenden Anforderungsbereich für WPC Produkte im Außenbereich liegt.

Somit ist es gelungen, ein qualitativ hochwertiges WPC auf Poly(alkyl)(meth)acrylat-Basis herzustellen.

Die vorliegende Erfindung wird nachfolgend im Detail beschrieben.

Die Qualität von WPC Materialien ist stark abhängig von der Einhaltung verschiedener Parameter. So haben die Erfinder herausgefunden, dass die Fließeigenschaften des Polymeren ebenso von Bedeutung sind, wie die Einhaltung bestimmter Temperaturobergrenzen, ab derer Holzpartikel beginnen, geschädigt zu werden. Es hat sich herausgestellt, dass diese Temperatur bei der Herstellung von WPC Werkstoffen unter 225°C, bevorzugt unter 220°C liegen sollte, um die Verkohlung der Holzpartikel weitgehend auszuschließen. Gleichzeitig sollte bei dieser Temperatur das Polymer aufgeschmolzen sein und eine ausreichende Fließfähigkeit besitzen. Alleine diese Tatsache sprach bislang gegen einen Einsatz von PMMA, da Standard-PMMA erst über 230°C ein visko-elastisches Fließverhalten annimmt.

Es ist weiterhin entscheidend für den Gebrauch von WPC Materialien, dass praxisnahe Produkteigenschaften Mindestgrößen aufweisen bzw. Maximalgrenzen nicht überschreiten. Es sind dies beispielsweise die Gewichtszunahme durch Wasser, das Quellverhalten infolge Nässe, sowie Materialfestigkeiten, wie z.B. Biege- und Bruchfestigkeit.

Werkstoffe, z. B. Holzfasern, mit Zellulose als Hauptbestandteil sind extrem polar und hydrophil. Die Feuchtigkeitsaufnahme bis hin zu großen Materialtiefen wird maßgeblich durch die Hydrophilie des zellulosehaltigen Werkstoffs verursacht.

In der vorliegenden Erfindung ist es durch Verwendung eines für Zellulose kompatiblen Haftvermittlers zusammen mit einem speziellen Poly(alkyl)(meth)acrylat Matrixmaterial und einem Gleitmittel gelungen, die Holzpartikel mit dem Polymeren sehr gut bis vollständig zu "umgeben" bzw. "einzuhüllen". Dadurch konnte die Wasseraufnahme signifikant reduziert werden.

Unter Poly(alkyl)(meth)acrylat Matrixmaterial wird im Rahmen der vorliegenden Erfindung ein Matrixmaterial verstanden, dass ausschließlich Poly(alkyl)(meth)acrylat als Polymerkomponente enthält aber auch ein Matrixmaterial, das einen Blend aus verschiedenen Poly(alkyl)(meth)acrylaten oder Poly(alkyl)(meth)acrylat(en) und anderen Polymeren enthält aber auch ein Matrixmaterial, bei dem es sich um ein Copolymer aus zumindest einem Poly(alkyl)(meth)acrylat und weiteren Comonomeren, bevorzugt Styrol, α-Methylstyrol, (Meth)acrylsäure und/oder (Alkyl)acrylate, Glutarsäureanhydrid, (Alkyl)(meth)acrylamine, (Alkyl)(meth)acrylimide, N-Vinylpyrolidon, Vinylacetat, Ethylen oder Propylen, handelt.

Hinsichtlich des Poly(alkyl)(meth)acrylat Matrixmaterials hat sich dessen Fließverhalten als wichtiges Kriterium herausgestellt. Das erfindungsgemäß als Matrixmaterial verwendete Poly(alkyl)(meth)acrylat weist daher einen Schmelzindex MVR [230°C, 3.8kg] im Bereich von 0,5 - 30 ml/10min, bevorzugt 1-20 ml/10min und besonders bevorzugt im Bereich von 1-10 ml/10min auf.

Versuche mit verschiedene Poly(alkyl)(meth)acrylat Qualitäten haben gezeigt, dass bei zu hochmolekularen Poly(alkyl)(meth)acrylat-Schmelzen eine Vermischung mit z. B. Holzpartikeln nur sehr schwer möglich ist, da beim notwendigen Temperaturanstieg eine einsetzende Schädigung der Holzpartikel gefunden wurde. Bei zu niedermolekularem Poly(alkyl)(meth)acrylat kann es zu Problemen mit dem "Aufschwimmen" der Holzfasern im Plastifiziergerät und somit zu Schwierigkeiten mit der Durchmischung der Komponenten kommen.

Die Definition von "alkyl" im Poly(alkyl)(meth)acrylat-Matrixmaterial kann identisch sein mit der oben für das Copolymer angegebenen Definition. Besonders bevorzugt wird Polymethyl(meth)acrylat, Polyethyl(meth)acrylat oder Polybutyl(meth)acrylat verwendet.

Die Bezeichnung "(Meth)acrylat" steht im Rahmen der vorliegenden Erfindung generell und ganz allgemein sowohl für Methacralyte als auch für Acrylate als auch für Mischungen von beidem.

Neben dem Poly(alkyl)(meth)acrylat Matrixmaterial umfasst der Kunststoff der vorliegenden Erfindung zumindest einen mit zellulose kompatibelen Haftvermittler. Unter einem "mit Zellulose kompatiblen Haftvermittler" wird ein Haftvermittler verstanden, der funktionelle Gruppen enthält, welche mit den OH-Gruppen der Zellulose Wasserstoffbrückenbindungen,ionische Bindungen oder chemische Verbindungen bilden können.

In einer ersten bevorzugten Ausführungsform der vorliegenden Erfindung wird der Haftvermittler als separate Komponente neben dem Matrixmaterial (Komponente a) in die Formulierung des Verbundmaterials zugegeben. D.h. das Matrixmaterial kann zwar ein Copolymer sein, der Haftvermittler bildet in dieser Ausführungsform jedoch kein Copolymer mit dem Matrixpolymer bzw. ist nicht Bestandteil eines Matrixcopolymers. Bei dem hierbei bevorzugt verwendeten Haftvermittler handelt es sich vorzugsweise um ein Copolymer umfassend ein oder mehrere Monomer(e) ausgewählt aus der Gruppe bestehend aus zyklischen Carbonsäureanhydrid-Derivaten wie z. B. Glutarsäureanhydrid, (Meth)acrylsäurederivaten wie z.B. Methacrylsäure oder Acrylsäure, Amino-, Imid-Monomere und Epoxy-Gruppen enthaltenden Monomere, bevorzugt (Alkyl)(meth)acrylamine, (Alkyl)(meth)acrylimide, N-Vinylpyrolidon. Weiterhin können ein oder mehrere Monomere ausgewählt aus der Gruppe bestehend aus Styrol, α-Methylstyrol, α-Styrol, Acrylaten, Methacrylaten, Vinylacetat, Ethylen oder Propylen enthalten sein.

Die Copolymere des Haftvermittlers können mit statistischer Verteilung der Monomereinheiten aber auch als Propf-Copolymer verwendet werden. Als zyklische Carbonsäureanhydrid-Derivate werden bevorzugt solche mit einem 5-, 6- oder 7 gliedrigen Ring, besonders bevorzugt Maleinsäureanhydrid und Glutarsäureanhydrid, verwendet.

"Alkyl" im Haftvermittlercoploymer steht für einen verzweigten oder unverzweigten, cyclischen oder linearen Alkylrest mit 1 bis 20, bevorzugt 1 bis 8, besonders bevorzugt 1 bis 4 Kohlenstoffatomen, welcher mit funktionellen Gruppen substituiert sein oder Heteroatome wie O, S oder N aufweisen kann. Bevorzugt handelt es sich um einen Methyl, Ethyl, Butyl oder Cyclohexyl-Rest.

Bei dem erfindungsgemäß verwendeten Haftvermittler handelt es sich bevorzugt um ein niedrig-molekulares Copolymer. Besonders bevorzugt um ein Styrol- Maleinsäureanhydrid Copolymer, ganz besonders bevorzugt um ein unter dem Markenname XIRAN® SMA der niederländischen Firma Polyscope Polymers B.V. kommerziell verfügbares Polymer.

Der Schmelzindex MVR [230°C, 3.8kg] des Haftvermittler Copolymers liegt bevorzugt im Bereich von 1-30 ml/10min, besonders bevorzugt 2 -20 ml/10min und ganz besonders bevorzugt im Bereich von 3-15 ml/10min.

Der Anteil des Haftvermittlers bezogen auf das Gesamtgewicht des erfindungsgemäßen Verbundmaterials ist abhängig von der Konzentration der zur Zellulose hin befähigten brückenbildenden funktionalen Gruppen innerhalb des Haftvermittlers. Der Anteil des Haftvermittlers kann schwanken zwischen 0,5 und 70 Gew. %, bevorzugt 1 Gew.% und Gew. 50%, besonders bevorzugt 1 Gew.% und Gew.40%, ganz besonders bevorzugt 2 Gew.% und Gew.30%, speziell bevorzugt im Bereich 3 Gew.% bis 25 Gew.% und ganz speziell bevorzugt im Bereich 3 Gew.% bis 15 Gew.%. In einer ganz besonders bevorzugten Ausführungsform wird ein Styrol-Maleinsäureanhydrid Copolymer - namentlich Xiran® SZ 22065 - mit ca. 20 - 22 Gew% wirksamer Maleinsäureanhydrid-Gruppen eingesetzt.

Diese erste bevorzugte Ausführungsform erlaubt eine maximale Flexibilität bei der Herstellung und Komposition des Verbundmaterials.

In einer zweiten bevorzugten Ausführungsform der vorliegenden Erfindung werden der Haftvermittler (Komponente b) und das Matrixpolymer (Komponente a) miteinender "verschmolzen", d.h. es wird ein Copolymer aus dem Haftvermittler und dem Matrixpolymer gebildet, so dass das "haftvermittlermodifizierte" Matrixpolymer direkt zur Herstellung des Verbundwerkstoffes eingesetzt werden kann. In diesem Fall ist es nicht notwendig, als isolierte weitere Komponente einen Haftvermittler zuzugeben, dies ist jedoch durchaus möglich.

In dieser Ausführungsform wird bevorzugt ein Copolymer aus Poly(alkyl)(meth)acrylat und dem Haftvermittler, bevorzugt ausgewählt aus der Gruppe bestehend aus Monomer(meth)acrylsäure, zyklischen Carbonsäureanhydrid-Derivaten, Glutarsäureanhydrid, (Meth)acrylsäurederivaten, bevorzugt (Meth)acrylsäure, Amino-, Imid-Monomere und Epoxy-Gruppen enthaltenden Monomeren, mit Styrol, α-Styrol, Acrylaten und/oder, Methacrylaten verwendet wie es zum Beispiel das Altuglas® HT121 darstellt.

Das Haftvermittler-Copolymer, bevorzugt aus Poly(alkyl)(meth)acrylat und(Meth)acrylsäure, besitzt bevorzugt einen MVR [230°C, 3.8kg] im Bereich von 0,5 - 30 ml/10min, besonders bevorzugt 1-20 ml/10min und ganz besonders bevorzugt im Bereich von 1-10 ml/10min und stellt somit eine hinreichend niedrige Verarbeitungstemperatur und hinreichend gute Einarbeitungsfähigkeit der Zellulosekomponente sicher.

Diese zweite bevorzugte Ausführungsform weißt den besonderen Vorteil auf, dass die Komponenten a) and b) bei der Herstellung des Verbundmaterials nicht getrennt voneinander zugegeben werden müssen und somit der Aufwand zur Herstellung des Verbundmaterials geringer ist.

In einer besonders bevorzugten Ausführungsform der vorliegenden Erfindung, die auch die beiden zuvor beschriebenen bevorzugten Ausführungsformen umfasst, umfasst der Haftvermittler ein zyklisches Carbonsäureanhydrid-Derivat dessen Anteil im Bereich von 0.1 - 5 Gew.% und besonders bevorzugt im Bereich von 0.4- 3 Gew.% bezogen auf das Gesamtgewicht des erfindungsgemäßen Verbundmaterials beträgt.

Neben dem Haftvermittler und dem Poly(alkyl)(meth)acrylat-Matrixpolymer umfasst das erfindungsgemäße Verbundmaterial auch eine zellulosehaltige Komponente, insbesondere Holzpartikel. Der Anteil der zellulosehaltigen Komponente in dem Verbundmaterial hat großen Einfluss auf die Produkteigenschaften. So werden einerseits die Flexibilität und mechanischen Eigenschaften verbessert sowie ein ökonomischer Vorteil erzielt. Andererseits führt ein hoher Anteil zu verstärkter Feuchtigkeitsaufnahme, so dass es schwierig ist, einen sehr hohen Anteil an zellulosehaltige Komponente zu realisieren. Mit dem erfindungsgemäßen Verbundmaterial ist es gelungen, insbesondere einen Holz-Füllstoffanteil von bis zu 80 Gew.%, bevorzugt 40 bis 80 Gew.%, besonders bevorzugt 50 bis 80 Gew.% und ganz besonders bevorzugt 60 bis 75 Gew.%, jeweils bezogen auf das Gesamtgewicht des Verbundmaterials zu realisieren.

Bei der erfindungsgemäß verwendeten zellulosehaltigen Komponente handelt es sich bevorzugt um Holz oder Papier oder Pappe oder andere zellulosehaltige Materialien. Bevorzugt weist die zellulosehaltige Komponente einen Zelluloseanteil von mindestens 20 Gew.-%, besonders bevorzugt mindestens 30 Gew.-%, ganz besonders bevorzugt mindestens 40 Gew.-% auf. insbesondere bevorzugt wird Holz verwendet. Hinsichtlich der Holzpartikel gibt es bei den erfindungsgemäßen Verbundmaterialien keine besonderen Beschränkungen. Beispielweise können Holzsplitter, Sägespäne, Holzfasern oder Holzmehle verwendet werden.

Es hat sich im Rahmen der vorliegenden Erfindung gezeigt, dass es vorteilhaft ist, wenn das Verbundmaterial ein Gleitmittel umfasst. Das Gleitmittel ist wichtig um eine gute Verarbeitbarkeit der Formmasse und niedrige Verarbeitungstemperaturen realisieren zu können. Als Gleitmittel können insbesondere Polyolefine, polare Esterwachse, Polyethylenwachse, Carbon- und Fettsäuren sowie deren Ester (z.B. Stearate) sowie langkettige Fettalkohole und Fettalkoholester verwendet werden. Der Anteil des Gleitmittels bezogen auf die Gesamtmasse des Verbundmaterials beträgt bevorzugt 0,1 - 5 Gew.%, besonders bevorzugt 0,1 - 4 Gew.%, ganz besonders bevorzugt 0,5 bis 4 Gew.% und speziell bevorzugt 1 bis 3 Gew.%.

Die erfindungsgemäßen Verbundmaterialien können weitere übliche Hilfsstoffe und/oder Additive wie z. B. Farbstoffe, Lichtstabilisatoren, IR-Absorber, antimikrobielle Wirkstoffe, Flammschutzmittel, Thermostabilisatoren, Antioxidantien, vernetzende Polymere, faserverstärkende Zusatzstoffe organischer oder anorganischer Art, Polysiloxane, Polysiloxanamine und/oder Polysiloxanimine enthalten.

In einer besonders bevorzugten Ausführungsform enthalten die erfindungsgemäßen Verbundmaterialien im Kunststoff ein Schlagzähmodifizierungsmittel, insbesondere in einem Anteil von 0,1 bis 15 Gew.%, bevorzugt 0,5 bis 10 Gew.% und ganz besonders bevorzugt 1 bis 6 Gew. %, jeweils bezogen auf die Masse der im Verbundwerkstoff enthaltenen Kunststoffkomponenten. Es können alle handelsüblichen Schlagzähmodifizierungsmittel verwendet werden, insbesondere Elastomerteilchen mit einem mittleren Teilchendurchmesser von 10 bis 300 nm (Messungen z. B. mit der Ultrazentrifugenmethode). Bevorzugt weisen die Elastomerteilchen einen Kern mit einer weichen Elastomerphase und zumindest einer daran gebundenen Hartphase auf.

Als besonders vorteilhaft haben sich Holz-Kunststoff-Verbundmaterialien herausgestellt, die zu bis zu 80 Gew.% Holzpartikel sowie mindestens 15 Gew.% Poly(alkyl)(meth)acrylat aufweisen, jeweils bezogen auf das Gesamtgewicht des Verbundmaterials.

In einer besonders bevorzugten Ausführungsform der vorliegenden Erfindung umfasst das erfindungsgemäße Verbundmaterial die folgenden Komponenten:

| | |
|---|---|
| a) Poly(alkyl)(meth)acrylat-Matrixpolymer: | 1 - 59 Gew.%, bevorzugt 1 - 57,5 Gew.% |
| b) Haftvermittler: | 1 - 50 Gew.% |
| c) zellulosehaltige Komponente, bevorzugt Holzfasern: | 40 - 80 Gew.% |
| d) Gleitmittel: | 0,1 - 5 Gew.%, bevorzugt 0,5 - 4 Gew.%, besonders bevorzugt 0,5 - 3 Gew.% |
| e) Farbmittel | 0 - 5 Gew.% |
| f)Lichtstabilisatoren | 0 - 0.5 Gew.%, bevorzugt 0.01-0.2 Gew.% |

wobei die Komponenten a) und b) zusammen 9,5 % bis 59,9 Gew. % des Gesamtgewichts der sechs oben genannten Komponenten ausmachen und sich die Summe der Anteile der sechs o.g. Komponenten zu 100 Gew.% addiert. Hierbei bezieht sich 100 Gew.% auf das Gesamtgewicht der o.g. Komponenten. Dieses kann identisch mit dem Gesamtgewicht des Verbundmaterials sein, kann aber auch weniger als 100 Gew.% des Verbundmaterials betragen, wenn das Verbundmaterial noch andere als die o.g. sechs Komponenten umfasst. Die Komponenten a) und b) können wie oben in der bevorzugten Ausführungsform als eine Komponente vereinigt sein.

Das erfindungsgemäße Verbundmaterial kann hergestellt werden, in dem man zumindest ein zellulosehaltiges Material mit zumindest einem oben beschriebener Kunststoff, einem Gleitmittel und optional einem und/oder einem anderen der o. g. Hilfsstoffe und/oder Additive vermischt und zu einem Verbundmaterial verarbeitet. Diese Verarbeitung erfolgt bevorzugt durch Extrusion oder Spritzguss. Dabei wird bevorzugt bei einer Schmelztemperatur unterhalb von 230 °C, besonders bevorzugt unterhalb von 225 °C, ganz besonders bevorzugt von 170 bis 220 °C, speziell bevorzugt von 190 bis 215 °C und ganz speziell bevorzugt von 190 bis 210 °C plastifiziert.

Die erfindungsgemäßen Verbundmaterialien können in allen für WPC bekannten Anwendungen, insbesondere als Werkstoff in Bereichen mit erhöhter Feuchtigkeitseinwirkung, speziell im Außenbereich, wie z. B. als Bodenbeläge, z. B. als Terrassenpaneele etc., als Konstruktionsmaterialien, wie z. B. als Konstruktionshölzer, Bretter, Balken, Pfosten, Schalungstafeln, Gartenhütten, Spieltürme, Spielgeräte, Sandkästen, Carports, Pavillons, Türzargen, Türblätter, Fensterbänke etc., als Wandelemente, als Wandverkleidungen, Schallschutzelemente, Balustraden, als Deckenverkleidungen, als Dachabdeckungen, im Schiffsbau oder zum Bau von Hafenanlagen, z. B. Bootsstegen, Bootsabweiser, Schiffdecks etc., als wartungsfreier Möbelwerkstoff im Innen- und Außenbereich, wie z.B. Stühle, Liegen, Regale, Theken, Gartenbänke, Küchenmöbel, Arbeitsplatten, Badmöbel etc., als Behälter bzw. Einfassungen, wie z. B. Raseneinfassungen, Beeteinfassungen, Rollrabatte, Blumentöpfe, Pflanztröge etc., verwendet werden.

Die Schallschutzwirkung der erfindungsgemäßen Bauteile kann auf der Reflektion des Schalls aber auch auf der Absorption beruhen. Während zur Reflektion auch glatte Oberflächen der Bauteile ausreichend sind, werden zur Anwendung als Schallschutzelemente mit Schallschluckwirkung bevorzugt Bauteile aus den erfindungsgemäßen Verbundmaterialien hergestellt, deren Oberfläche derart strukturiert ist, dass durch die Strukturierung ein schallschluckender Effekt erzielt wird. Weiterhin ist es besonders bevorzugt aus den erfindungsgemäßen Verbundmaterialien Hohlkammerplatten oder Profile herzustellen, welche mit entsprechenden Öffnungen bzw. Bohrungen versehen sind, die es erlauben, dass die Schallwellen in das Bauteil eindringen. Dadurch kann ein signifikanter Schallschluckeffekt erzielt werden. Kombinationen bzw. Abwandlungen der beiden genannten Varianten der Schallschutzelemente sind von der vorliegenden Erfindung ebenfalls erfasst.

### Meßmethoden:

### Schmelzindex MVR

Der MVR [230°C, 3.8kg] wird bestimmt nach ISO 1133

### Wasseraufnahme (Koch-Test)

Die Wasseraufnahme wird in einem Koch-Test in Anlehnung an die Norm EN 1087-1 bestimmt. Hierzu wird ein 100mm langer Probenabschnitt in Dicke und Breite des Produktionsmaßes für 5 h in kochendem Wasser eingetaucht und nach ca. 60min Abkühlung in kaltem Wasser auf Quellung und gravimetrischer Wasseraufnahme geprüft.

### Bruchfestigkeit und Durchbiegung

Die Bestimmung der Bruchfestigkeit sowie der Durchbiegung bei 500 N Belastung der erfindungsgemäßen Verbundwerkstoffe geschieht in Anlehnung an DIN EN 310 ("Holzwerkstoffe-Bestimmung des Biege-Elastizitätsmoduls und der Biegefestigkeit").

Die nachfolgenden Beispiele dienen der näheren Erläuterung und dem besseren Verständnis der vorliegenden Erfindung schränken diese bzw. deren Umfang jedoch in keiner Weise ein.

### Vergleichsbeispiel 1

Eine PMMA Formmasse mittleren Molekulargewichts, PLEXIGLAS^{®} FM 6N bzw. PLEXIGLAS^{®} FM 7N von Evonik Röhm GmbH, Darmstadt, wurde mit einem Anteil von 70 Gew.% Holzfasern vermischt und extrudiert. In Folge von hoher Temperatur (233°C und höher) und starker Haftung am Extrusionswerkzeug kam es zur Zersetzung (Verkohlung) der Holzpartikel. Eine Plastifizierung der beiden Komponenten war nur sehr unzureichend möglich.

### Vergleichsbeispiel 2:

Die Extrusion gemäß Vergleichsbeispiel 1 wurde unter Verwendung des polaren Esterwachses LICOWAX E der Firma Clariant, Sulzbach, als Gleitmittel wiederholt. Dadurch konnte die Temperatur im Herstellprozess bei ca. 200-205°C gehalten und die Metallhaftung verhindert werden. Eine Zersetzung der Holzpartikel konnte vermieden werden.

Die so hergestellten PMMA-Holzverbunde hatten jedoch den Nachteil, dass die Wasseraufnahme im Koch-Test bei 100°C, zwischen 20 und 40 Gew.% lag. Dementsprechend stellte sich das Feuchte bedingte Quellverhalten als unzureichend dar. WPC-Produkte mit der Zusammensetzung gemäß Vergleichsbeispiel 2 zeigten in allen Abmessungen (Länge, Breite, Dicke) extreme Abweichungen von der Ursprungsdimension und waren somit für den Einsatz im Freien nicht geeignet.

### Beispiel 1

### Allgemeine Beschreibung:

In der Rezeptur von Vergleichsbeispiel 2 wurde der Mischung entsprechend der ersten bevorzugten Ausführungsform Styrol-Maleinsäureanhydrid Copolymer separat als Haftvermittler zum Poly(alkyl)(meth)acrylat Matrixmaterial zugegeben.

Versuche zeigten, dass sich eine solche Mischung mit bis 75% Holzanteil im Bereich 210°C +/- 10K sehr gut plastifizieren lässt und WPC Extrudate hervorbringt, die eine sehr geringe Wasseraufnahme, hohe Dimensionsstabilität gegenüber Feuchte und eine hohe mechanische Stabilität aufweisen.

### Beispiel 1a

Der Versuch wurde wie in der allgemeinen Beschreibung durchgeführt. Es wurde ein Styrol- Maleinsäureanhydrid Copolymer mit ca. 20 - 22 Gew.% eingebautem Maleinsäureanhydrid als Haftvermittler verwendet.

Die Zusammensetzung der Einsatzmengen für die Extrusion gestaltete sich wie folgt:

| | |
|---|---|
| Holzfasern: 320 µm | 70% |
| Haftvermittler: XIRAN® SZ 22065 | 6,0% |
| Gleitmittel: LICOWAX® E | 3,0% |
| PMMA: PLEXIGLAS® 7N | 21% |

Die anwendungstechnischen Tests des erhaltenen WPC's ergaben folgende Ergebnisse:

| | |
|---|---|
| Wasseraufnahme im Kochtest bei 100°C: | 4.5% |
| Bruchfestigkeit: | 3.3 kN |
| Durchbiegung 500N: | 2.3 mm |

## Patentansprüche

1. Verbundmaterial aus zumindest einem zellulosehaltigen Material und zumindest einem Kunststoff,
**dadurch gekennzeichnet, dass** der Kunststoff
a) ein Poly(alkyl)(meth)acrylat-Matrixmaterial mit
a1) einem Schmelzindex MVR [230°C, 3.8kg] im Bereich von 0,5 - 30 ml/10min, besonders bevorzugt 1-20 ml/10min und ganz besonders bevorzugt im Bereich von 1-10 ml/10min, und
b) einen mit Zellulose kompatiblen Haftvermittler, enthält,
und dass das Verbundmaterial ein Gleitmittel umfasst.

2. Verbundmaterial nach Anspruch 1,
**dadurch gekennzeichnet,**
**dass** es sich bei dem Haftvermittler um ein Copolymer umfassend ein oder mehrere Monomer(e) ausgewählt aus der Gruppe bestehend aus zyklischen Carbonsäureanhydrid-Derivaten wie z. B. Glutarsäureanhydrid, (Meth)acrylsäurederivaten wie z.B. Methacrylsäure oder Acrylsäure, Amino-, Imid-Monomere und Epoxy-Gruppen enthaltenden Monomere, bevorzugt (Alkyl)(meth)acrylamine, (Alkyl)(meth)acrylimide, N-Vinylpyrolidon sowie optional ein oder mehrere Monomere ausgewählt aus der Gruppe bestehend aus Styrol, α-Methylstyrol, α-Styrol, Acrylaten, Methacrylaten, Vinylacetat, Ethylen oder Propylen, handelt.

3. Verbundmaterial nach Anspruch 2,
**dadurch gekennzeichnet,**
**dass** es sich bei dem zyklischen Carbonsäureanhydrid-Derivat, um ein Derivat mit einem 5-, 6- oder 7 gliedrigen Ring, bevorzugt Maleinsäureanhydrid oder Glutarsäureanhydrid handelt.

4. Verbundmaterial nach Anspruch 1,
**dadurch gekennzeichnet,**
**dass** die Komponenten a) und b) als eine Komponente vereinigt sind, d.h. ein Copolymer aus einem Poly(alkyl)(meth)acrylat und einem Haftvermittlermonomeren verwendet wird.

5. Verbundmaterial nach Anspruch 4,
**dadurch gekennzeichnet,**
**dass** als Poly(alkyl)(meth)acrylat mit zyklischen Carbonsäureanhydrid-Derivaten,Glutarsäureanhydrid, (Meth)acrylsäurederivaten, (Meth)acrylsäure Amino-, Imid-Monomere und Epoxy-Gruppen enthaltenden Monomeren, mit Styrol, α-Styrol, Acrylaten und/oder, Methacrylaten als Haftvermittlermonomer copolymerisiert wurde.

6. Verbundmaterial nach einem der Ansprüche 2 bis 5,
**dadurch gekennzeichnet,**
**dass** das der Schmelzindex MVR [230 °C, 3.8 kg] des Haftvermittlercopolymers im Bereich von 1-30 ml/10min, bevorzugt im Bereich von 3-15 ml/10min. aufweist.

7. Verbundmaterial nach einem der Ansprüche 1 bis 6,
**dadurch gekennzeichnet,**
**dass** der Anteil des Haftvermittlers bezogen auf das Gesamtgewicht des erfindungsgemäßen Verbundmaterials zwischen 0,5 und 70 Gew. %, bevorzugt 1 Gew.% und Gew. 50%, besonders bevorzugt 1 Gew.% und Gew.40%, ganz besonders bevorzugt 2 Gew.% und Gew.30%, speziell bevorzugt im Bereich 3 Gew.% bis 25 Gew.% und ganz speziell bevorzugt im Bereich 3 Gew.% bis 15 Gew.% beträgt.

8. Verbundmaterial nach einem der Ansprüche 1 bis 7,
**dadurch gekennzeichnet,**
**dass** es sich bei dem zellulosehaltigen Material um Holz oder Papier oder Pappe, bevorzugt mit einem Zelluloseanteil mindestens 20 Gew.%, besonders bevorzugt mind. 30 Gew.%, ganz besonders bevorzugt mindestens 40 Gew.%, handelt.

9. Verbundmaterial nach einem der Ansprüche 1 bis 8,
**dadurch gekennzeichnet,**
**dass** es, jeweils bezogen auf das Gesamtgewicht des Verbundmaterials, bis zu 80 Gew. % Holzpartikel sowie mindestens 15 Gew.% Poly(alkyl)(meth)acrylat aufweist.

10. Verbundmaterial nach einem der Ansprüche 1 bis 9,
**dadurch gekennzeichnet,**
**dass** als Gleitmittel ein Gleitmittel aus der Gruppe bestehend aus Polyolefinen, polaren Esterwachsen, Polyethylenwachsen, Carbon- und Fettsäuren sowie deren Estern (z.B. Stearate) sowie langkettige Fettalkohole und Fettalkoholester, verwendet wird.

11. Verbundmaterial nach einem der Ansprüche 1 bis 10,
**dadurch gekennzeichnet,**
**dass** es die folgenden Komponenten:
| | |
|---|---|
| a) Poly(alkyl)(meth)acrylat-Matrixpolymer: | 1 - 59 Gew.%, bevorzugt 1 - 57,5 Gew.% |
| b) Haftvermittler: | 1 - 50 Gew.% |
| c) zellulosehaltige Komponente, bevorzugt Holzfasern: | 40 - 80 Gew.% |
| d) Gleitmittel: | 0,1 - 5 Gew.%, bevorzugt 0,5 - 4 Gew.%, besonders bevorzugt 1 bis 3 Gew.% |
| e)Farbmittel | 0 - 5 Gew.% |
| f) Lichtstabilisatoren | 0 - 0.5 Gew.%, bevorzugt 0.01 - 0.2 Gew.% |
umfasst, wobei die Komponenten a) und b) zusammen 9,5 Gew.% bis 59,9 Gew.% des Gesamtgewichts der Komponenten a) bis f) ausmachen und sich die Summe der Komponenten a) bis f) zu 100 Gew.% ergibt.

12. Verfahren zur Herstellung eines Verbundmaterials aus zumindest einem zellulosehaltigen Material und zumindest einem Kunststoff auf Basis von Poly(alkyl)(meth)acrylaten,
**dadurch gekennzeichnet,**
**dass** zumindest ein Kunststoff nach Anspruch 1 mit zumindest einer zellulosehaltigen Komponente und einem Gleitmittel vermischt und zu einem Verbundmaterial verarbeitet wird.

13. Verfahren zur Herstellung eines Verbundmaterials nach Anspruch 12,
**dadurch gekennzeichnet,**
**dass** zumindest ein Kunststoff nach Anspruch 1 mit zumindest einer zellulosehaltigen Komponente und optional einem anderen der o. g. Zusatzstoffe vermischt und zu einem Verbundmaterial verarbeitet wird.

14. Verfahren zur Herstellung eines Verbundmaterials nach einem der Ansprüche 12 oder 13,
**dadurch gekennzeichnet,**
**dass** das Gemisch durch Extrusion oder Spritzguss, bevorzugt bei Temperaturen unterhalb von 230 °C, besonders bevorzugt unterhalb von 225 °C, ganz besonders bevorzugt von 170 bis 220 °C, speziell bevorzugt von 190 bis 215 °C und ganz speziell bevorzugt von 190 bis 210 °C, zu einem Verbundmaterial verarbeitet wird.

15. Verwendung eines Verbundmaterials nach einem der Ansprüche 1 bis 12 als Werkstoff in Bereichen mit erhöhter Feuchtigkeitseinwirkung, insbesondere im Außenbereich, wie z. B. als Bodenbeläge, z. B. als Terrassenpaneele etc., als Konstruktionsmaterialien, wie z. B. als Konstruktionshölzer, Bretter, Balken, Treppen und Treppenstufen, Pfosten, Schalungstafeln, Gartenhütten, Spieltürme, Spielgeräte, Sandkästen, Carports, Pavillons, Türzargen, Türblätter, Fensterbänke etc., als Wandelemente, als Wandverkleidungen, Schallschutzelemente, Balustraden, als Deckenverkleidungen, als Dachabdeckungen, im Schiffsbau oder zum Bau von Hafenanlagen, z. B. Bootsstegen, Bootsabweiser, Schiffdecks etc., als wartungsfreier Möbelwerkstoff im Innen- und Außenbereich, wie z.B. Stühle, Liegen, Regale, Theken, Gartenbänke, Küchenmöbel, Arbeitsplatten, Badmöbel etc., als Behälter bzw. Einfassungen, wie z. B. Raseneinfassungen, Beeteinfassungen, Rollrabatte, Blumentöpfe, Pflanztröge etc. als Spielbauklötze und im Automobilinnendekor und in der Automobilaußenverkleidung sowie als Wohnwagenanbauteile.

## Claims

1. Composite material made of at least one cellulose-containing material and of at least one plastic,
**characterized in that** the plastic comprises
a) a poly(alkyl) (meth)acrylate matrix material with
a1) a MVR melt index [230°C, 3.8 kg] in the range from 0.5 to 30 ml/10 min, particularly preferably from 1 to 20 ml/10 min, and very particularly preferably in the range from 1 to 10 ml/10 min, and
b) a cellulose-compatible adhesion promoter, and **in that** the composite material comprises a lubricant.

2. Composite material according to Claim 1,
**characterized in that**
the adhesion promoter involves a copolymer comprising one or more monomers selected from the group consisting of cyclic carboxylic anhydride derivatives, e.g. glutaric anhydride, (meth)acrylic acid derivatives, e.g. methacrylic acid or acrylic acid, aminomonomers, imide monomers, and monomers comprising epoxy groups, preferably (alkyl)(meth)acrylamines, (alkyl)(meth)acrylimides, N-vinylpyrrolidone, and also optionally comprising one or more monomers selected from the group consisting of styrene, α-methylstyrene, α-styrene, acrylates, methacrylates, vinyl acetate, ethylene, and propylene.

3. Composite material according to Claim 2,
**characterized in that**
the cyclic carboxylic anhydride derivative involves a derivative having a 5-, 6-, or 7-membered ring, preferably maleic anhydride or glutaric anhydride.

4. Composite material according to Claim 1,
**characterized in that**
components a) and b) have been combined in the form of one component, i.e. a copolymer of a poly(alkyl) (meth)acrylate and of an adhesion-promoter monomer.

5. Composite material according to Claim 4,
**characterized in that**
poly(alkyl) (meth)acrylate copolymerized with cyclic carboxylic anhydride derivatives comprises glutaric anhydride, (meth)acrylic acid derivatives, (meth)acrylic acid aminomonomers, imide monomers, and monomers comprising epoxy groups, with styrene, α-styrene, acrylates, and/or methacrylates, as adhesion-promoter monomer.

6. Composite material according to any of Claims 2 to 5,
**characterized in that**
the MVR melt index [230°C, 3.8 kg] of the adhesion-promoter copolymer is in the range from 1 to 30 ml/10 min, preferably in the range from 3 to 15 ml/10 min.

7. Composite material according to any of Claims 1 to 6,
**characterized in that**
the proportion of the adhesion promoter, based on the total weight of the composite material of the invention, is from 0.5 to 70% by weight, preferably from 1% by weight to 50% by weight, particularly preferably from 1% by weight to 40% by weight, very particularly preferably from 2% by weight to 30% by weight, specifically preferably in the range from 3% by weight to 25% by weight and very specifically preferably in the range from 3% by weight to 15% by weight.

8. Composite material according to any of Claims 1 to 7,
**characterized in that**
the cellulose-containing material involves wood or paper or paperboard, preferably with a proportion of cellulose of at least 20% by weight, particularly preferably at least 30% by weight, very particularly preferably at least 40% by weight.

9. Composite material according to any of Claims 1 to 8,
**characterized in that**
it comprises, based in each case on the total weight of the composite material, up to 80% by weight of wood particles, and also at least 15% by weight of poly(alkyl) (meth)acrylate.

10. Composite material according to any of Claims 1 to 9,
**characterized in that**
lubricant used comprises a lubricant from the group consisting of polyolefins, polar ester waxes, polyethylene waxes, carboxylic acids and fatty acids, and also esters of these (e.g. stearates), or else comprises long-chain fatty alcohols and fatty alcohol esters.

11. Composite material according to any of Claims 1 to 10,
**characterized in that**
it comprises the following components:
| | |
|---|---|
| a) poly(alkyl) (meth)acrylate matrix polymer: | from 1 to 59% by weight, preferably from 1 to 57.5% by weight |
| b) adhesion promoter: | from 1 to 50% by weight |
| c) cellulose-containing component, preferably wood fibers: | from 40 to 80% by weight |
| d) lubricant: | from 0.1 to 5% by weight, preferably from 0.5 to 4% by weight, particularly preferably from 1 to 3% by weight |
| e) colorant | from 0 to 5% by weight |
| f) light stabilizers | from 0 to 0.5% by weight, preferably from 0.01 to 0.2% by weight, |
where components a) and b) together make up from 9.5% by weight to 59.9% by weight of the total weight of components a) to f), and the entirety of components a) to f) gives 100% by weight.

12. Process for producing a composite material made of at least one cellulose-containing material and of at least one plastic based on poly(alkyl) (meth)acrylates,
**characterized in that**
at least one plastic according to Claim 1 is mixed with at least one cellulose-containing component and with a lubricant, and is processed to give a composite material.

13. Process for producing a composite material, according to Claim 12,
**characterized in that**
at least one plastic according to Claim 1 is mixed with at least one cellulose-containing component and optionally with another of the abovementioned additional materials, and is processed to give a composite material.

14. Process for producing a composite material according to Claim 12 or 13,
**characterized in that**
the mixture is processed by extrusion or injection molding, preferably at temperatures below 230°C, particularly preferably below 225°C, very particularly preferably from 170 to 220°C, specifically preferably from 190 to 215°C, and very specifically preferably from 190 to 210°C, to give a composite material.

15. Use of a composite material according to any of Claims 1 to 12 as material in sectors with relatively high exposure to moisture, in particular in the outdoor sector, for example as flooring, e.g. garden decking, etc., as construction materials, for example as framing timber, boards, beams, staircases and staircase steps, posts, formwork panels, garden sheds, climbing frames, play equipment, sandpits, carports, gazebos, door frames, doors, windowsills, etc., as walling elements, as wall cladding, sound-deadening elements, balustrades, as ceiling cladding, as roof covering, in shipbuilding, or for the construction of harbor facilities, e.g. landing stages, fenders, ship decks, etc., as maintenance-free furniture material in the indoor and outdoor sector, for example chairs, sunbeds, shelving, bar tops, garden seats, kitchen furniture, worktops, bathroom furniture, etc., as containers or edging, for example lawn edging, flower-bed edging, log-roll edging, flower pots, plant troughs, etc., as play blocks, and as decorative interiors for automobile interiors, and in the external shell of automobiles, and also as mounted components for mobile homes.

## Revendications

1. Matériau composite comportant au moins un matériau cellulosique et au moins une matière plastique, **caractérisé en ce que** la matière plastique contient
a) un matériau de matrice poly(alkyl) (méth)acrylate avec
a1) un indice de fusion MVR [230°C, 3,8 kg] situé dans la plage de 0,5 - 30 ml/10 min, de préférence de 1 - 20 ml/10 min, et de préférence encore dans la plage de 1 - 10 ml/10 min, et
b) un agent adhésif compatible avec la cellulose, et **en ce que** le matériau composite comprend un lubrifiant.

2. Matériau composite selon la revendication 1, **caractérisé en ce que** l'agent adhésif est un copolymère comprenant un ou plusieurs monomère(s) sélectionné(s) dans le groupe composé de dérivés cycliques de l'anhydride d'acide carboxylique comme par exemple l'anhydride de l'acide glutarique, de dérivés de l'acide (méth)acrylique comme par exemple des monomères contenant l'acide méthacrylique ou l'acide acrylique, des amino ou imido monomères et des monomères contenant des groupes époxy, de préférence des (alkyl)(méth)acrylamines, des (alkyl)(méth)acrylimides, la N-vinylpyrrolidone ainsi qu'en option un ou plusieurs monomère(s) sélectionné(s) dans le groupe composé de styrène, α-méthylstyrène, α-styrène, acrylates, méthacrylates, acétate de vinyle, éthylène ou propylène.

3. Matériau composite selon la revendication 2, **caractérisé en ce que** le dérivé cyclique de l'anhydride d'acide carboxylique est un dérivé avec un anneau à 5, 6 ou 7 éléments, de préférence l'anhydride de l'acide maléique ou l'anhydride de l'acide glutarique.

4. Matériau composite selon la revendication 1, **caractérisé en ce que** les composants a) et b) sont réunis en un composant, c'est-à-dire que l'on utilise un copolymère composé d'un poly(alkyl) (méth)acrylate et d'un monomère d'agent adhésif.

5. Matériau composite selon la revendication 4, **caractérisé en ce que** du poly(alkyl)(méth)acrylate a été copolymérisé avec des dérivés cycliques de l'anhydride d'acide carboxylique, l'anhydride de l'acide glutarique, des dérivés de l'acide (méth)acrylique, des amino ou imido monomères de l'acide (méth)acrylique, et des monomères contenant des groupes époxy, avec du styrène, du α-styrène, des acrylates et/ou des (méthacrylates comme monomère d'agent adhésif.

6. Matériau composite selon l'une quelconque des revendications 2 à 5, **caractérisé en ce que** l'indice de fusion MVR [230°C, 3,8 kg] du copolymère d'agent adhésif se situe dans la plage de 1 - 30 ml/10 min, de préférence dans la plage de 3 - 15 ml/10 min.

7. Matériau composite selon l'une quelconque des revendications 1 à 6, **caractérisé en ce que** la part de l'agent adhésif, rapportée au poids total du matériau composite selon l'invention, vaut entre 0,5 et 70 % en poids, de préférence entre 1 % en poids et 50 % en poids, de préférence encore entre 1 % en poids et 40% en poids, de préférence particulière entre 2 % en poids et 30 % en poids, de préférence plus particulière dans la plage de 3 % en poids à 25 % en poids et de préférence plus particulière encore dans la plage de 3 % en poids à 15 % en poids.

8. Matériau composite selon l'une quelconque des revendications 1 à 7, **caractérisé en ce que** le matériau cellulosique est du bois ou du papier ou du carton, de préférence avec une part de cellulose d'au moins 20 % en poids, de préférence encore d'au moins 30 % en poids, et de préférence particulière encore d'au moins 40 % en poids.

9. Matériau composite selon l'une quelconque des revendications 1 à 8, **caractérisé en ce qu'**il présente, par rapport au poids total du matériau composite, jusqu'à 80 % en poids de particules de bois ainsi qu'au moins 15 % en poids de poly(alkyl) (méth)acrylate.

10. Matériau composite selon l'une quelconque des revendications 1 à 9, **caractérisé en ce que** l'on utilise comme lubrifiant un lubrifiant du groupe composé de polyoléfines, de cires-esters polaires, de cires de polyéthylène, d'acides carboxyliques et gras ainsi que de leurs esters (par exemple stéarates) ainsi que d'alcools gras et d'esters d'alcools gras à longue chaîne.

11. Matériau composite selon l'une quelconque des revendications 1 à 10, **caractérisé en ce qu'**il comprend les composants suivants:
| | |
|---|---|
| a) polymère de matrice poly(alkyl) (méth)acrylate: | 1-59 % en poids, de préférence 1-57,5 % en poids |
| b) agent adhésif: | 1-50 % en poids |
| c) composant cellulosique, de préférence fibres de bois: | 40-80 % en poids |
| d) lubrifiant: | 0,1-5 % en poids, de préférence 0,5-4 % en poids, |
| | de préférence encore 1 à 3 % en poids |
| e) colorant: | 0-5 % en poids |
| f) photostabilisants: | 0-0,5 % en poids, de préférence 0,01-0,2 % en poids |
dans lequel les composants a) et b) forment ensemble 9,5 % en poids à 59,9 % en poids du poids total des composants a) à f) et la somme des composants a) à f) vaut 100 % en poids.

12. Procédé de fabrication d'un matériau composite contenant au moins un matériau cellulosique et au moins une matière plastique à base de poly(alkyl) (méth)acrylates, **caractérisé en ce que** l'on mélange au moins une matière plastique selon la revendication 1 avec au moins un composé cellulosique et un lubrifiant et on le transforme en un matériau composite.

13. Procédé de fabrication d'un matériau composite selon la revendication 12, **caractérisé en ce que** l'on mélange au moins une matière plastique selon la revendication 1 avec au moins un composant cellulosique et en option avec une autre des matières d'addition précitées et on le transforme en un matériau composite.

14. Procédé de fabrication d'un matériau composite selon l'une des revendications 12 ou 13, **caractérisé en ce que** l'on transforme le mélange en un matériau composite par extrusion ou moulage par injection, de préférence à des températures inférieures à 230°C, de préférence encore inférieures à 225°C, de préférence particulière encore de 170 à 220°C, de préférence toute particulière encore de 190 à 215°C, et de préférence très particulière encore de 190°C à 210°C.

15. Utilisation d'un matériau composite selon l'une quelconque des revendications 1 à 12 comme matériau dans des zones soumises à une humidité accrue, en particulier à l'extérieur, comme par exemple comme revêtements de sol, par exemple comme panneaux pour terrasses, etc., comme matériaux de construction, comme par exemple comme bois de construction, planches, poutres, escaliers et marches d'escaliers, poteaux, panneaux de coffrage, abris de jardin, tours de jeux, appareils de jeux, bacs à sable, carports, pavillons, châssis de porte, vantaux de porte, appuis de fenêtre, etc., comme éléments de murs, comme revêtements de murs, comme éléments d'insonorisation, balustrades, comme revêtements de plafonds, comme couvertures de toitures, dans la construction navale ou pour la construction d'installations portuaires, par exemple jetées, ducs d'albe, ponts de bateaux, etc., comme matériau sans entretien pour meubles intérieurs et extérieurs, comme par exemple chaises, chaises longues, étagères, comptoirs, bancs de jardin, meubles de cuisine, plans de travail, meubles de salle de bain, etc., comme récipients ou bordures, comme par exemple bordures de pelouses, bordures de plates bandes, bordures en rouleaux, bacs à fleurs, jardinières, etc., comme blocs de jeux de construction et dans la décoration intérieure des automobiles, et dans l'habillage extérieur des automobiles ainsi que comme composants de caravanes.
